# FASCICULE DE BREVET EUROPEEN

(11) **EP 2 881 808 B1**
(45) Date de publication et mention de la délivrance du brevet: **19.08.2020**
(21) Numéro de dépôt: 14195947.8
(22) Date de dépôt: 02.12.2014
(51) Int. Cl.: G04D 3/00, B23K 26/00, B23K 26/18, B23K 26/362, B23K 26/402, B44C 1/22, B23K 26/0622, B23K 103/16, B23K 103/00

(54) **Procédé de fabrication d'un composant horloger**
Verfahren zur Herstellung einer Uhrkomponente
Method for manufacturing a clock component

(30) Priorité: 03.12.2013 EP 13195421
(43) Date de publication de la demande: 10.06.2015
(73) Titulaire: ROLEX SA, 1211 Genève 26 (CH)
(72) Inventeur: El Garrag, Mourad, 2000 Neuchâtel (CH); Saucy, Clément, 2516 Lamboing (CH); Oliveira, Alexandre, 74800 Amancy (FR)
(74) Mandataire: Moinas & Savoye SARL

(56) Documents cités:
- EP-A1- 1 070 999
- DE-A1-102008 061 182
- US-A1- 2011 309 553
- US-A1- 2012 322 242

## Description

La présente invention concerne un procédé de fabrication d'un composant horloger.

La fabrication d'un composant horloger destiné à être intégré dans une montre peut comprendre la réalisation d'éléments de décor sur ledit composant, en particulier dans le cas d'une ébauche. Ces éléments de décor peuvent par exemple représenter un nom, un logo et/ou un motif de manufacture, un numéro de calibre, un nombre de pierres, ou tout autre élément distinctif. Ils peuvent être gravés par usinage ou par gravure chimique. Un masquage préalable des zones ne devant pas être gravées est généralement nécessaire. A cet effet, une couche de résine photosensible est déposée sur la surface à graver puis les zones à graver sont dégagées, par exposition UV et développement de la résine. Après avoir gravé les éléments de décor, un métal ou alliage métallique ou autre matériau est déposé dans le fond de gravure, afin de réaliser un contraste de couleur entre l'ébauche et le fond de gravure. La résine est ensuite éliminée. L'ébauche est le plus souvent en laiton et revêtue d'un revêtement esthétique et/ou fonctionnel, réalisé par exemple par rhodiage ou dorage.

Le document EP1070999 décrit un procédé de façonnage superficiel d'une pièce d'un mouvement d'horlogerie. Selon ce procédé, la pièce à façonner est d'abord revêtue d'un revêtement, ou recouvrement, continu en résine photosensible. Puis, par exposition UV et développement de la résine, des parties prédéfinies de la pièce sont dégagées, notamment pour la formation de motifs. Les parties dégagées sont ensuite traitées par exemple par réalisation d'une gravure par voie chimique, ou en alternative par un dépôt galvanique, PVD (dépôt physique en phase vapeur) et/ou CVD (dépôt chimique en phase vapeur) sur la surface non gravée.

De tels procédés s'avèrent en définitive relativement complexes. La présente invention vient améliorer la situation.

A cet effet, l'invention concerne un procédé de fabrication d'un composant horloger selon les revendications 1 et 11.

Grâce à l'invention, l'ablation de résine et la réalisation d'une cavité dans le support sont réalisées par un même moyen, à savoir des impulsions femtosecondes, simultanément ou directement l'une après l'autre (c'est-à-dire successivement, sans opération intermédiaire hormis un éventuel arrêt momentané des impulsions femtosecondes pour modifier les paramètres d'émission de ces impulsions). Ainsi, on effectue deux opérations distinctes par un même moyen et/ou à l'aide du même équipement, en même temps ou successivement (directement l'une après l'autre). Grâce à cela, la réalisation de gravures mises en couleur sur un composant horloger, par exemple, est grandement simplifiée.

En outre, le procédé de l'invention offre une grande souplesse de mise en œuvre.

Notons également que le traitement par impulsions femtosecondes offre une grande précision quelle que soit la matière traitée. Cela est particulièrement intéressant pour traiter des couches successives de différentes matières, et notamment former une ouverture à travers la résine et une cavité dans le support avec une précision constante.

Avantageusement, les impulsions femtosecondes sont des impulsions d'une durée inférieure à 1 picoseconde produites par un équipement laser femtoseconde.

Dans un mode de réalisation particulier, les impulsions femtosecondes agissant pour réaliser l'ouverture à travers la couche de protection et les impulsions femtosecondes agissant pour réaliser la cavité dans le support sont produites par un même équipement laser femtoseconde. L'utilisation d'un même équipement laser pour délivrer les impulsions femtosecondes impactant la couche de protection et celles impactant le support permet de simplifier la mise en œuvre du procédé.

Avantageusement, la couche de protection est une résine photosensible.

Dans ce cas, et avantageusement encore, le procédé comprend une étape de polymérisation de la résine par exposition UV.

Une fois polymérisée, la résine offre une meilleure adhérence au support.

La résine peut être déposée par des techniques de dépôt connues, comme par exemple un dépôt par électrophorèse et un dépôt par enduction centrifuge.

En alternative non limitative, la couche de protection est une couche métallique, ou encore une couche formée par un matériau électriquement isolant, comme un oxyde.

Le dépôt de matière dans la cavité peut être réalisée de manière connue, comme par exemple en utilisant l'une des techniques du groupe comportant un dépôt galvanique, un dépôt chimique en phase vapeur, un dépôt physique en phase vapeur et un dépôt de couches atomiques.

Dans un premier mode de réalisation, le support comprend une surface du composant horloger et l'étape de dépôt de matière à travers l'ouverture consiste à déposer un matériau de décoration dans la cavité formant une creusure.

Dans ce cas, et avantageusement, l'ouverture à travers la couche de protection dégage un rebord autour de la creusure au niveau de la surface du composant horloger, et en ce que, lors de l'étape de dépôt du matériau de décoration, on dépose ledit matériau de décoration sur le rebord.

Dans un deuxième mode de réalisation, lors des étapes d'enlèvement de matière dans la couche de protection et dans le support, on réalise un moule présentant au moins une première profondeur égale à l'épaisseur de la couche de protection et au moins une deuxième profondeur égale à l'épaisseur de la couche de protection augmentée de la profondeur d'une cavité dans le support.

Avantageusement, lors de l'étape de dépôt de matière, on dépose dans ledit moule un métal ou alliage métallique formant le composant horloger, puis on démoule le composant horloger en éliminant la couche de protection et en détachant le support.

Avantageusement encore, lors de l'étape de dépôt de matière, on remplit le moule et on dépose une couche additionnelle de métal ou alliage métallique du composant horloger sur la couche de protection, et en ce qu'il est prévu une étape subséquente de mise à niveau consistant à éliminer ladite couche additionnelle.

Dans un troisième mode de réalisation,
- lors des étapes d'enlèvement de matière dans la couche de protection et dans le support, on réalise dans le support au moins une cavité de réception d'un insert, dont l'embouchure communique avec l'ouverture à travers la couche de protection, celle-ci dégageant une partie du support autour de ladite embouchure;
- on place l'insert dans ladite cavité, ledit insert faisant saillie hors de la cavité dans l'ouverture à travers la couche de protection;
- lors de l'étape de dépôt de matière, on dépose à travers ladite ouverture un métal ou alliage métallique,
- puis on démoule le composant horloger intégrant l'insert en éliminant la couche de protection et en détachant le support.

Dans un quatrième mode de réalisation, le support comportant un substrat sur lequel au moins un premier élément de composant horloger est déposé:
- lors de l'étape de dépôt, la couche de protection est déposée sur le support de manière à recouvrir intégralement le premier élément,
- lors des étapes d'enlèvement de matière dans la couche de protection et dans le support, on réalise une ouverture à travers la couche de protection et une creusure dans le premier élément de composant horloger, ladite ouverture dégageant la creusure, un rebord de la creusure et une partie du substrat adjacente au premier élément de composant horloger, et formant un moule comportant la creusure, ledit rebord et ladite partie de substrat adjacente;

- lors de l'étape de dépôt de matière, on dépose du métal ou un alliage métallique dans ledit moule afin de former un deuxième élément de composant horloger;
- puis on démoule le composant horloger comportant le premier et le deuxième élément en éliminant la résine et en détachant le substrat.

L'invention sera mieux comprise à l'aide de la description suivante de plusieurs exemples de réalisation du procédé de fabrication d'un composant horloger selon l'invention, en référence aux dessins annexés sur lesquels :
- Les figures 1A à 1E représentent différentes étapes d'un premier exemple de réalisation du procédé de l'invention ;
- Les figures 2A à 2E représentent différentes étapes d'un deuxième exemple de réalisation du procédé de l'invention ;
- Les figures 3A à 3G représentent différentes étapes d'un troisième exemple de réalisation du procédé de l'invention ;
- Les figures 4A à 4G représentent différentes étapes d'un quatrième exemple de réalisation du procédé de l'invention ;
- Les figures 5A à 5F représentent différentes étapes d'un cinquième exemple de réalisation du procédé de l'invention ;
- La figure 6 représente un élément de décor réalisé à l'aide d'une variante du procédé représenté sur les figures 1A-1E.

Chaque groupe de figures (1A-1E ; 2A-2E ; 3A-3G ; 4A-4G ; 5A-5F) est un exemple de mise en œuvre d'un mode de réalisation, montrant une vue en coupe du composant au cours de différentes étapes. Les éléments identiques, analogues ou correspondants représentés sur les différentes figures portent les mêmes références.

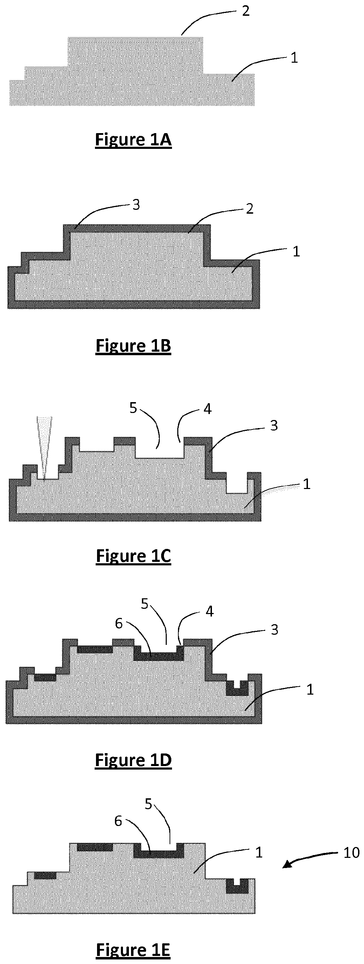

Selon un premier exemple de réalisation, décrit en référence aux figures 1A à 1E, le procédé de fabrication d'un composant horloger de l'invention permet de graver un ou plusieurs motifs sur le composant horloger et de mettre en couleur ce ou ces motifs. Le composant horloger comprend ici une pièce 1 ou substrat ou support de forme complexe, destinée par exemple à la réalisation d'une ébauche, comme une platine ou un pont, ou encore d'un cadran, ou encore d'un élément d'habillement horloger, comme une lunette, une boîte, une couronne, un réhaut, un fond, ou un élément de bracelet.

Lors d'une première étape préalable (figure 1A), la pièce usinée 1 est préparée en vue d'un traitement subséquent. La surface externe 2 de la pièce 1 est notamment nettoyée et dégraissée de façon connue.

Une couche de protection 3, par exemple en résine, est ensuite déposée, par exemple par électrophorèse, sur la surface externe 2 de la pièce 1, lors d'une deuxième étape (figure 1B). L'épaisseur de la couche de résine est par exemple comprise entre 10 et 30 µm. La résine est ici photosensible. On pourrait à la place utiliser un autre matériau adapté pour former une couche de protection recouvrant la pièce 1. Grâce au traitement appliqué lors de la première étape, l'adhésion de la couche de protection 3 sur la surface support 2 est améliorée. En variante, le dépôt de la couche de protection pourrait également être réalisé par trempage, par enduction centrifuge ou par toute autre technique de dépôt adaptée.

La deuxième étape de dépôt est ici suivie d'une troisième étape d'exposition lumineuse, lors de laquelle la couche de résine déposée est exposée à des rayons UV qui ont pour effet de polymériser la résine. La polymérisation assure une meilleure adhérence de la résine au support (pièce 1), une meilleure résistance lors d'éventuels traitements subséquents comme par exemple une déposition galvanique ou un nettoyage avec utilisation d'ultrasons. La résine utilisée est par exemple une résine de type négatif, par exemple le produit vendu sous la dénomination Eagle 2100 ED. Cette troisième étape d'exposition UV est toutefois facultative. En variante, la résine pourrait être polymérisée par un traitement thermique.

Le procédé comprend ensuite une quatrième étape d'enlèvement de matière par traitement laser femtoseconde (figure 1C).

Par « traitement laser femtoseconde », que l'on pourrait également appeler « traitement par impulsions femtosecondes », on entend désigner un traitement consistant à appliquer un faisceau d'impulsions femtosecondes produites par un laser femtoseconde sur une zone à traiter. Une impulsion « femtoseconde », dite également « ultra-brève », est une oscillation sinusoïdale propagative du champ électromagnétique (de fréquence éventuellement variable dans le temps), modulée en amplitude par une enveloppe dont la durée caractéristique est petite en comparaison à 1 picoseconde (1 picoseconde = 1 ps = 10⁻¹² seconde), typiquement comprise entre quelques femtosecondes et quelques centaines de femtosecondes (1 femtoseconde = 1 fs = 10⁻¹⁵ seconde).

Le traitement laser femtoseconde réalisé lors de la quatrième étape consiste à émettre, à l'aide d'un équipement d'émission laser femtoseconde, des impulsions femtoseconde impactant de façon ciblée la résine 3 et la pièce 1. Il permet d'enlever une partie prédéfinie, localisée, de la résine 3 et de graver la pièce 1.

Plus précisément, la quatrième étape comprend :
- une première sous-étape, lors de laquelle une ouverture 4 est réalisée à travers la couche de protection 3 par traitement laser femtoseconde,
- une deuxième sous-étape, lors de laquelle une cavité 5, formant une creusure, ou gravure, et positionnée au droit de l'ouverture 4, est réalisée dans la pièce 1, par traitement laser femtoseconde.

L'ouverture traversante 4 et la cavité 5 dans la pièce 1 sont réalisées successivement, directement l'une après l'autre, par le même équipement d'émission laser femtoseconde. Par le terme « directement » l'une après l'autre, on entend signifier que les deux sous-étapes indiquées ci-dessus sont mises en œuvre successivement et sans étape intermédiaire, hormis un éventuel arrêt momentané des impulsions femtosecondes pour modifier les paramètres de réglage d'émission laser tels que le nombre de passages du faisceau laser, la vitesse de balayage, la puissance d'émission, ou encore le diamètre du faisceau laser.

A titre d'exemple illustratif, le traitement laser femtoseconde mis en œuvre présente les caractéristiques suivantes :
- la longueur d'onde du laser est de l'ordre de 1030 nm ;
- la durée des impulsions est de l'ordre de 320 fs (femtoseconde, soit 10⁻¹⁵ d'une seconde) ;
- la fréquence de répétition est typiquement compris entre 1 et 600 kHz, par exemple de l'ordre de 100kHz ou de l'ordre de 500 kHz ;
- la puissance sur cible est typiquement compris dans la gamme de 1 à 20W, par exemple de l'ordre de 2W ou de l'ordre de 16W ;
- la fluence moyenne par impulsion est typiquement supérieure à 1 10¹³ W/cm², par exemple de l'ordre de 1,3 10¹³ W/cm² ou de 2,5 10¹³ W/cm² ;
- le taux de recouvrement entre deux impacts successifs du faisceau laser est de l'ordre de 95%.

En variante, les deux sous-étapes de réalisation de l'ouverture 4 à travers la couche de résine 3 et de gravure de la pièce 1 pour former la cavité 5 pourraient être mises en œuvre de façon simultanée. On pourrait dans ce cas utiliser un même faisceau laser pour enlever de la matière à la fois dans la couche de résine 3 et dans la pièce 1.

Notons que les impulsions femtosecondes agissant pour graver la résine 3 et les impulsions femtosecondes agissant pour graver le support 1 sont ici produites par un même équipement laser femtoseconde. On pourrait éventuellement envisager d'utiliser deux équipements laser femtoseconde ou un même équipement émettant deux faisceaux laser distincts d'impulsions femtoseconde, comme par exemple un même équipement avec un séparateur de faisceau et un doubleur ou tripleur de fréquence pour changer la longueur d'onde de l'un des faisceaux.

La quatrième étape d'enlèvement de matière peut être répétée plusieurs fois, la position relative entre la pièce 1 et l'équipement laser pouvant être modifiée entre les itérations successives, afin de réaliser une pluralité de cavités, ou creusures, dans la pièce 1. Dans l'exemple de réalisation illustratif représenté sur la figure 1C, quatre cavités ont été réalisées dans la pièce 1.

Chaque creusure 5 comprend des parois latérales verticales et un fond horizontal. On pourrait toutefois envisager de graver d'autres formes de creusure, comme notamment des creusures avec un profil non rectangulaire, par exemple des creusures de forme concave.

Les différentes creusures peuvent avoir des profondeurs respectives différentes, la profondeur souhaitée de chaque creusure étant obtenue en adaptant les paramètres de fonctionnement de l'équipement d'émission laser (notamment le nombre de passages du faisceau laser sur la zone à graver et la vitesse de balayage). La profondeur des creusures est par exemple comprise entre 80 et 120 µm.

L'étape d'enlèvement de matière est suivie d'une cinquième étape d'ajout ou de dépôt de matière (figure 1D). Dans l'exemple particulier décrit ici, un traitement galvanique est mis en œuvre pour déposer un revêtement décoratif 6 en métal ou en alliage métallique, au fond de chaque creusure 5. On pourrait utiliser un autre matériau, comme un oxyde, un carbure et/ou un nitrure. On pourrait aussi utiliser une autre technique de dépôt telle qu'un dépôt physique en phase vapeur dit « PVD » (de l'anglais « *Physical Vapor Déposition* »), un dépôt chimique en phase vapeur dit « CVD » (de l'anglais « *Physical Vapor Déposition* ») ou encore un dépôt atomique dit « ALD » (de l'anglais « Atomic Layer Déposition »). On pourrait aussi utiliser une autre technique, comme une technique de conversion telle que l'anodisation. On pourrait également utiliser d'autres matières, comme par exemple une peinture, ou encore une laque. L'épaisseur du revêtement 6 déposé dans chaque creusure 5 peut être égale, inférieure ou supérieure à la profondeur de la creusure 5, selon l'aspect esthétique souhaité.

Le procédé comprend enfin une sixième étape d'élimination de la résine 3 (figure 1E). La résine 3 est éliminée de façon habituelle, selon les préconisations du fabricant de résine.

Le procédé pourrait encore comprendre une étape de mise à niveau par polissage de la surface 2.

A titre d'exemple illustratif, la pièce 1 est en laiton et les dépôts métalliques dans les creusures 5 sont en or. Après élimination complète de la résine 3, on obtient un composant horloger 10 ayant un aspect bicolore.

Le laser femtoseconde offre une grande précision de gravure, tant au niveau de la définition latérale que de la profondeur. Il permet en outre de graver de façon adéquate la zone souhaitée, sans affecter les zones environnantes, notamment sans affecter la résine. Il permet aussi de graver la pièce sans modifier la matière aux abords de la zone gravée, notamment sans affecter thermiquement les abords de la zone gravée, sans produire de bavure d'usinage ou encore sans former de cordon de matière fondue et solidifiée à nouveau. Ces multiples avantages sont propres au laser femtoseconde et ne peuvent être obtenus avec d'autres types de laser utilisés couramment dans l'industrie horlogère, comme les lasers à impulsion nanoseconde ou picoseconde. En particulier, l'utilisation de lasers à impulsion nanoseconde ou picoseconde pour graver des composants produit des résultats qui sont esthétiquement inacceptables.

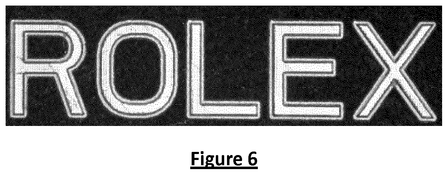

Dans une variante de réalisation, l'ouverture 4 ménagée à travers la couche de résine 3 est plus large que l'ouverture de la creusure 5 dans le plan de la surface 2, ce qui dégage un rebord autour de la creusure 5 à la surface 2 de la pièce 1. Lors de l'étape subséquente de dépôt d'un matériau décoratif, celui-ci est déposé non seulement dans le fond de la creusure 5 mais également sur le rebord de celle-ci. On obtient ainsi un motif ayant un aspect esthétique détouré, comme représenté sur la figure 6.

On pourrait envisager de réaliser un décor à l'issue de l'étape de préparation, par usinage et/ou dépôt de couches minces.

En cas d'enlèvement de matière profond (typiquement supérieur à 100 µm) par traitement laser femtoseconde, un dépôt de couleur noire est susceptible apparaître dans la gravure. Ce dépôt peut être enlevé par un lavage lessiviel ou à l'aide d'une solution chimique apte à dissoudre le dépôt ou bien à l'aide d'un faisceau laser femtoseconde ayant des caractéristiques adaptées. On pourrait bien entendu combiner ces différentes techniques.

Après élimination de la résine et éventuellement mise à niveau, le composant horloger 10 est prêt à être assemblé.

Les exemples de réalisation suivants diffèrent du premier exemple de réalisation décrit ci-dessus par les éléments et caractéristiques qui vont maintenant être décrits.

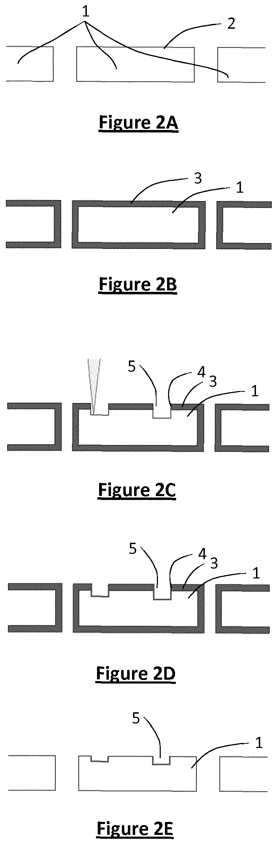

Dans un deuxième exemple de réalisation, décrit en référence aux figures 2A à 2E, le procédé de fabrication de l'invention est mis en œuvre pour graver et déposer un revêtement sur un composant horloger comportant un substrat en silicium, comme par exemple une roue, une ancre, ou encore un spiral. On pourrait envisager d'utiliser un autre matériau de substrat, notamment un matériau semi-conducteur ou isolant tel que le diamant, la céramique, ou encore le quartz.

Lors d'une première étape, des composants 1, représentés sur la figure 2A, sont réalisés à partir d'une plaquette de silicium par des techniques standards de photolitographie et de gravure profonde, par exemple par une technique de gravure ionique réactive profonde « DRIE » (de l'anglais « Deep Reactive Ion Etching »).

Lors d'une deuxième étape de dépôt, une couche de protection 3, par exemple en résine photosensible, est déposée sur la surface 2 des composants, comme représenté sur la figure 2B. De façon optionnelle, la résine peut être polymérisée après dépôt, soit par exposition à des rayons UV, soit par traitement thermique, afin notamment d'améliorer son adhérence au substrat.

Lors d'une troisième étape d'enlèvement de matière, par un traitement au laser femtoseconde, on réalise une ouverture 4 à travers la couche de protection 3, par enlèvement de résine, puis on grave le composant 1, à travers l'ouverture 4, afin de réaliser une cavité 5. L'ouverture 4 et la gravure, ou cavité, 5 sont réalisées à l'aide d'un même équipement d'émission laser femtoseconde, directement l'une après l'autre, sans étape intermédiaire, hormis un éventuel arrêt momentané de l'équipement laser pour modifier les paramètres d'émission. En variante, l'ouverture 4 et la cavité 5 pourraient être réalisées simultanément. Plusieurs cavités 5 peuvent ainsi être réalisées dans chaque substrat 1.

Lors d'une quatrième étape (figure 2D), un revêtement de type métallique, oxyde, carbure et/ou nitrure est déposé soit sur toute la surface, par exemple par un dépôt ALD, soit de façon ciblée dans le fond des cavités gravées 5 par un dépôt ALD ou par une technique de dépôt directionnelle telle que le dépôt PVD ou CVD.

Lors d'une cinquième étape (figure 2E), la résine 3 est éliminée de façon connue, selon les préconisations du fabricant. Le composant peut alors être assemblé.

Alternativement, on pourrait réaliser les creusures et le revêtement avant la gravure profonde, les cavités et revêtement étant alors protégés par la couche de résine déposée pour réaliser la gravure profonde.

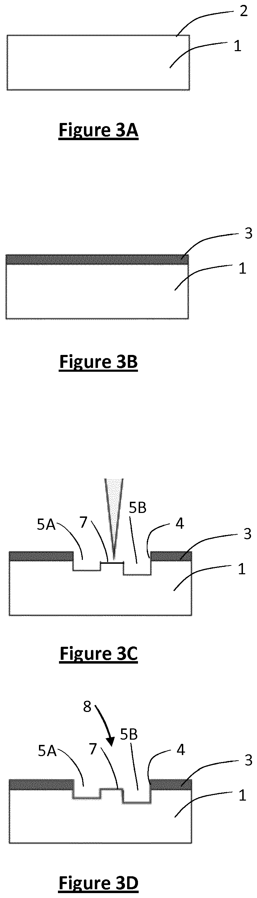

Un troisième exemple de réalisation du procédé de fabrication de l'invention va maintenant être décrit en référence aux figures 3A à 3G. Dans ce cas, le procédé de l'invention est utilisé pour le moulage d'un composant horloger.

Lors d'une première étape (figure 3A), on se munit d'un substrat en silicium 1. En variante, on pourrait utiliser un substrat métallique 1.

Lors d'une deuxième étape (figure 3B), une couche de protection est déposée sur le substrat, par exemple par enduction centrifuge (en anglais « spin coating »). La couche de protection peut être une résine photosensible, de type positive ou négative, comme par exemple une résine de type « SU-8 ».

De façon optionnelle, après dépôt, la résine peut être polymérisée, soit par exposition à des rayons UV, soit par traitement thermique, afin notamment d'améliorer son adhérence au substrat.

Lors d'une troisième étape (figure 3C), on procède à un enlèvement de matière dans la couche de résine 3 et dans le substrat 1, par un traitement laser femtoseconde, afin de réaliser un moule 8.

Lors de cette troisième étape, on réalise une ouverture 4 à travers la couche de résine 3 puis, directement (c'est-à-dire sans étape intermédiaire hormis un éventuel arrêt momentané de l'émission laser pour régler les paramètres d'émission), on grave le substrat 1, au droit de l'ouverture 4, afin de réaliser une ou plusieurs cavités 5, à l'aide d'un même équipement d'émission laser. Dans l'exemple représenté sur la figure 3C, deux cavités 5A et 5B ont été creusées.

Les cavités réalisées 5A, 5B ont des parois latérales verticales et un fond horizontal et présentent ici des profondeurs respectives différentes. La profondeur souhaitée de chaque cavité 5A (5B) est obtenue en ajustant les paramètres d'application du faisceau laser femtoseconde, notamment le nombre de passages du faisceau laser sur la zone à traiter, la vitesse de balayage, la puissance d'émission, ou encore le diamètre du faisceau laser.

Lors de l'étape de traitement laser femtoseconde, on réalise une ouverture 4 dans la couche de résine 3 et, au droit de cette ouverture 4, on réalise dans le substrat 1 deux cavités 5A, 5B séparées par une partie dégagée 7 de la surface 2 du substrat 1, sur laquelle seule la résine 3 a été enlevée. L'ensemble comportant les cavités 5A, 5B, la partie de substrat dégagée 7 et les bords internes (ou flancs verticaux) de l'ouverture 4 forme le moule 8.

Bien entendu, on pourrait envisager d'autres configurations de moule comportant une ou plusieurs cavités dans le substrat 1 et une ou plusieurs parties dégagées de substrat. La forme et la profondeur de chaque cavité peuvent être adaptées en fonction du composant souhaité. On pourrait aussi envisager des cavités avec un profil différent d'un profil rectangulaire, comme par exemple un profil de forme concave, de forme trapézoïdale, ou autre.

Lors d'une quatrième étape (figure 3D), mise en œuvre dans le cas d'un substrat non conducteur, une couche conductrice est déposée sur des parois intérieures du moule 8. Cette couche conductrice peut recouvrir les surfaces horizontales formant le fond du moule et, éventuellement, les parois latérales verticales du moule 8 formées par les flancs verticaux du substrat 1 et de la résine 3.

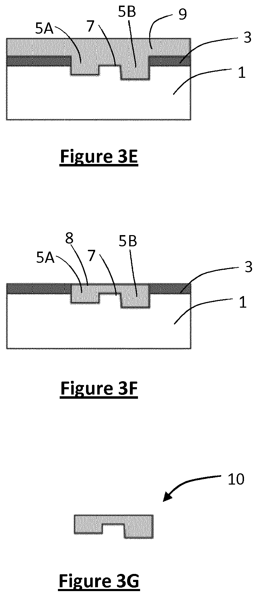

Lors d'une cinquième étape (figure 3E), on dépose par électroformage un métal ou alliage métallique 9 dans le moule 8 et sur une couche recouvrant la couche de résine 3.

De façon optionnelle, suite à cette étape, des opérations de reprise, d'usinage, de polissage, de mise à niveau ou de modification de surface, peuvent être réalisées sur le métal ou l'alliage métallique déposé. Ces opération(s) pourraient être réalisée(s) ultérieurement, en fin de fabrication (après détachage du substrat 1).

Dans l'exemple décrit ici, lors d'une sixième étape, on réalise une mise à niveau afin d'enlever la couche métallique supérieure 9, comme représenté sur la figure 3F. Le fait de déposer la couche supérieure 9 sur toute la surface permet d'améliorer l'uniformité et la qualité du dépôt à l'issue de l'étape de mise à niveau.

Lors d'une septième étape (figure 3G), le substrat 1 est détaché et la résine 3 est éliminée, par voie chimique ou par traitement plasma. L'élimination de la résine peut avoir lieu avant ou après détachage du substrat 1.

On obtient ainsi un composant horloger 10 métallique ayant la forme du moule 8.

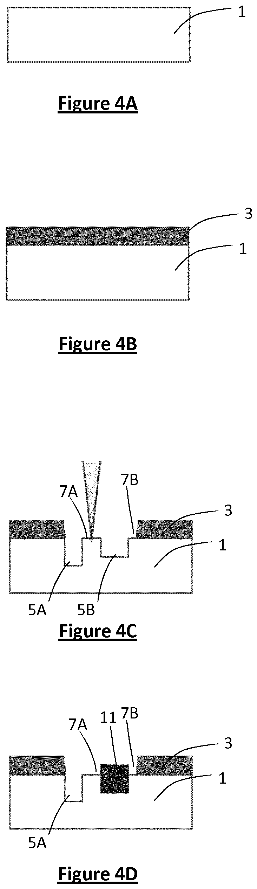

En référence aux figures 4A à 4G, on va décrire un quatrième exemple de réalisation du procédé de l'invention pour la fabrication par moulage d'un composant horloger intégrant un insert.

Les trois premières étapes sont analogues aux étapes du précédent exemple de procédé décrites en référence aux figures 3A à 3C et permettent de réaliser un moule 8 réalisé comportant ici :
- deux cavités 5A et 5B de profondeurs respectives différentes,
- une première partie de substrat dégagée 7A reliant les deux cavités 5A, 5B, et
- une deuxième partie de substrat dégagée 7B réalisée à proximité de la cavité 5B, l'ouverture de la cavité 5B étant entourée par un rebord dépourvu de résine.

Lors d'une quatrième étape (figure 4D), un insert 11 est placé dans l'une des cavités, ici la cavité 5B. L'insert 11 peut être en matériau conducteur ou isolant. Il fait ici saillie hors de la cavité 5B, dans l'ouverture 4 ménagée à travers la couche de résine 3, par une partie saillante dont la hauteur est ici inférieure à l'épaisseur de la couche de résine 3.

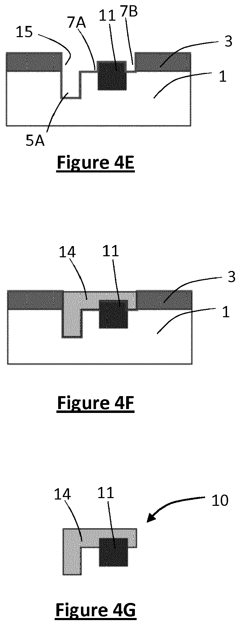

Lors d'une cinquième étape optionnelle (figure 4E), mise en œuvre selon la nature du substrat et de l'insert, une couche conductrice 15 est déposée à l'intérieur du moule. Cette couche conductrice peut recouvrir les surfaces au fond du moule 8, y compris la partie saillante de l'insert 11, et, éventuellement, les parois latérales verticales du moule 8 et de l'insert 11.

Lors d'une sixième étape (figure 4F), on dépose par électroformage un métal ou alliage métallique 14 dans le moule 8, en recouvrant intégralement la partie saillante de l'insert 11. Celle-ci est ainsi noyée dans le métal ou alliage métallique déposé 14.

Lors d'une septième étape, le substrat 1 est détaché et la résine 3 est éliminée, de façon connue, par exemple par un traitement plasma ou par voie chimique. L'élimination de la résine peut être réalisée avant ou après détachage du substrat.

On obtient ainsi un composant horloger 10, tel que représenté sur la figure 4G, comportant la partie moulée 14 et l'insert 11 imbriqué l'un dans l'autre, prêt à être assemblé.

De façon optionnelle, une ou plusieurs des opérations suivantes peuvent être effectuées, avant ou après détachage du substrat : reprise, usinage, polissage, mise à niveau et modification de surface.

A la place d'un insert faisant saillie hors de sa cavité de réception, on pourrait installer un insert non saillant (autrement dit de hauteur égale à la profondeur de la cavité de réception) et ménageant une creusure dans sa surface supérieure. Dans ce cas, lors de la sixième étape, le métal ou alliage métallique est également déposé par électroformage dans la creusure de l'insert, ce qui permet de solidariser l'insert au reste du composant. La creusure peut être réalisée avant mise en place de l'insert dans la cavité ou après, par exemple par gravure à l'aide de l'équipement laser femtoseconde.

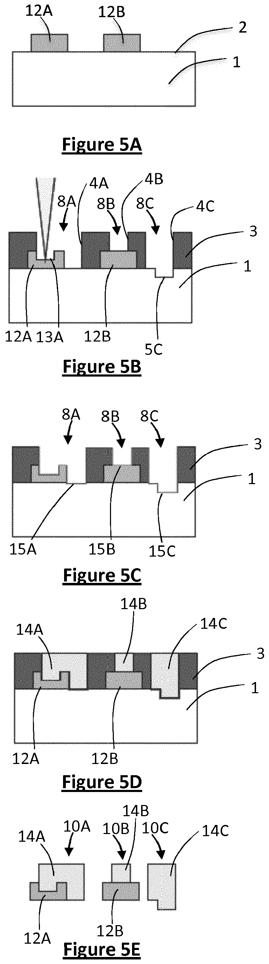

Un cinquième exemple de réalisation du procédé de l'invention va maintenant être décrit en référence aux figures 5A à 5F. Dans cet exemple de réalisation, le procédé de l'invention est utilisé pour la fabrication de différents composants horlogers.

Lors d'une première étape (figure 5A), on se munit d'un substrat 1 solidaire, sur sa face supérieure 2, d'un ou plusieurs éléments métalliques (ici deux éléments 12A, 12B) formant un premier niveau. Ces éléments métalliques 12A, 12B constituent des éléments de composant horloger.

Lors d'une deuxième étape, une couche de protection 3, par exemple en résine, est déposée sur le substrat 1 de manière à recouvrir intégralement les premiers éléments de composant horloger 12A, 12B du premier niveau et à s'étendre au-dessus du premier niveau en formant un deuxième niveau supérieur.

Lors d'une troisième étape (figure 5B), on procède à un enlèvement de matière par traitement laser femtoseconde. On réalise lors de cette étape un ou plusieurs des éléments suivants :
- ouverture(s) à travers la couche de résine 3 ;
- creusure(s) ménagée(s) dans un élément métallique du premier niveau au droit d'une ouverture à travers la résine ;
- cavité(s) ménagée(s) dans le substrat au droit d'une ouverture à travers la résine.

Ces éléments peuvent être combinés (c'est-à-dire associés pour former un même moule) ou bien séparés (c'est-à-dire dissociés pour former des moules distincts). Ils sont réalisés à l'aide du même équipement d'émission laser femtoseconde.

Pour la réalisation d'une creusure dans un élément métallique de composant horloger ou d'une cavité dans le substrat, on enlève d'abord une partie de la résine puis dans la foulée, c'est-à-dire directement, sans opération intermédiaire hormis un éventuel arrêt momentané de l'émission laser, on grave soit l'élément métallique 12A, 12B (pour réaliser la creusure), soit le substrat 1 (pour réaliser la cavité). En variante, l'ablation de la résine et la gravure (d'une creusure dans l'élément de composant horloger ou d'une cavité dans le substrat) pourraient être réalisées de façon simultanée.

Dans l'exemple particulier illustratif, décrit en référence à la figure 5B, on a réalisé :
- à gauche sur la figure, une ouverture 4A à travers la couche de résine 3 et une creusure 13A dans l'élément métallique 12A, l'ouverture 4A dégageant la creusure 13A, un rebord de la creusure 13A et une partie de la surface 2 du substrat 1 adjacente à l'élément métallique 12A, le tout combiné formant un moule ou une partie de moule 8A comportant la creusure, le rebord de creusure, et la partie adjacente dégagée de substrat ;
- au centre sur la figure, une ouverture 4B à travers la résine 3, dégageant une partie ici centrale de la surface supérieure du deuxième élément métallique, et formant un moule ou une partie de moule 8B ;
- à droite sur la figure, une ouverture 4C à travers la résine 3 et une cavité 5C, l'ouverture 4C étant positionnée au droit de la cavité 5C et dégageant une partie du substrat 2 jouxtant la cavité 5C, le tout formant un moule ou une partie de moule 8C.

Lors d'une quatrième étape optionnelle (figure 5C), mise en œuvre selon la nature du substrat (c'est-à-dire si le substrat est non métallique, par exemple en silicium), une couche conductrice 15A-15C, est déposée à l'intérieur de chaque moule 8A, 8B, 8C. Cette couche conductrice peut recouvrir les surfaces horizontales au fond des moules ou des parties de moule 8A-8C et, éventuellement, les parois latérales verticales des moules ou des parties de moule 8A-8C.

Lors d'une cinquième étape (figure 5D), on dépose par électroformage un métal ou alliage métallique 14A-14C dans chaque moule ou une partie de moule 8A, 8B, 8C.

Lors d'une sixième étape (figure 5E), le substrat 1 est détaché et la résine 3 est éliminée, de façon connue, par exemple par un traitement plasma ou par voie chimique. L'élimination de la résine peut être réalisée avant ou après détachage du substrat.

De façon optionnelle, une ou plusieurs des opérations suivantes peuvent être effectuées, avant ou après détachage du substrat : reprise, usinage, polissage, mise à niveau et modification de surface.

A l'issue des étapes décrites ci-dessus, on obtient trois composants ou parties de composant horlogers 10A, 10B, 10C, représentés sur la figure 5E. Le composant ou partie de composant 10A comporte deux éléments métalliques (12A, 14A) insérés l'un dans l'autre. Le composant ou partie de composant 10B comporte deux éléments métalliques (12B, 14B) accolés l'un à l'autre. Le composant ou partie de composant 10C est monobloc (14C).

Dans le premier exemple de réalisation, la couche de protection déposée a préférentiellement une épaisseur de 1µm au moins, plus préférentiellement une épaisseur de 10µm au moins, et avantageusement une épaisseur comprise par exemple entre 10 et 30 µm. Les gravures réalisées dans le substrat 1 ont préférentiellement une profondeur de 10µm au moins, plus préférentiellement une profondeur de 50µm au moins, plus préférentiellement une profondeur comprise entre 50µm et 500µm, et avantageusement une profondeur comprise entre 80 et 120 µm.

Dans les autres exemples de réalisation, la couche de protection déposée a préférentiellement une épaisseur de 100µm au moins, plus préférentiellement une épaisseur de 200µm au moins, et avantageusement une épaisseur comprise par exemple entre 200 et 1000 µm. Les gravures réalisées dans le substrat 1 ont préférentiellement une profondeur de 100µm au moins, plus préférentiellement une profondeur de 200µm au moins, plus préférentiellement une profondeur comprise entre 200µm et 1000µm.

Dans les différents exemples de réalisation, le revêtement ou matériau déposé est formé d'un seul matériau. En variante, le dépôt peut être évidemment formé de plusieurs matériaux et/ou plusieurs couches. Comme exemples non-limitatifs, on peut citer un dépôt formé d'une première couche d'accroche pour améliorer l'adhésion et une deuxième couche fonctionnelle et/ou décorative, ou encore un dépôt formé de couches successives de deux matériaux déposés en alternance.

Le composant en lui-même peut être formé d'un bloc d'un matériau, ou être composé de plusieurs matériaux, pouvant être préférentiellement des alliages métalliques, par exemple et de façon non limitative des alliages métalliques cuivreux comme le laiton, des alliages métalliques ferreux, des alliages métalliques amorphes, ou encore des alliages de métaux précieux. En alternative, le composant peut être formé de matériaux céramiques comme la zircone ou l'alumine, ou encore de matériaux semi-conducteurs ou isolants comme le Silicium, le diamant ou le quartz.

Les cavités réalisées dans le composant peuvent avoir des parois latérales verticales et un fond horizontal. Elles peuvent en outre présenter des profondeurs respectives différentes, la profondeur souhaitée de chaque cavité étant obtenue en ajustant les paramètres d'application du faisceau laser femtoseconde, notamment le nombre de passages du faisceau laser sur la zone à traiter, la vitesse de balayage, la puissance d'émission, ou encore le diamètre du faisceau laser. La forme et la profondeur de chaque cavité peuvent être ainsi adaptées en fonction du composant souhaité. On pourrait aussi envisager des cavités avec un profil différent d'un profil rectangulaire, comme par exemple un profil de forme concave, de forme trapézoïdale, ou autre.

En combinaison avec la réalisation de cavités, il est aussi possible d'enlever uniquement la résine sur certaines parties de la surface, afin de former une partie dégagée de la surface du substrat sur laquelle seule la résine 3 a été enlevée.

## Revendications

1. Procédé de fabrication d'un composant horloger décoré, comportant les étapes suivantes:
• dépôt d'une couche de protection (3) sur un support (1) ;
• enlèvement de matière consistant à réaliser une ouverture (4 ; 4A, 4B, 4C) à travers la couche de protection (3), le procédé comprenant les étapes complémentaires suivantes :
• enlèvement de matière consistant à former une cavité (5 ; 5A, 5B, 5C) dans ledit support (1), la cavité (5 ; 5A, 5B, 5C) étant positionnée au droit d'au moins une partie de l'ouverture (4 ; 4A, 4B, 4C) à travers la couche de protection (3),
• dépôt de matière (6 ; 14) à travers ladite ouverture (4 ; 4A, 4B, 4C), consistant à déposer un matériau de décoration dans la cavité formant une creusure et
• élimination de la couche de protection (3), et dans lequel les étapes d'enlèvement de matière consistant à réaliser respectivement l'ouverture (4 ; 4A, 4B, 4C) à travers la couche de protection (3) et la cavité (5 ; 5A, 5B, 5C) sont réalisées simultanément ou directement l'une après l'autre à l'aide d'impulsions femtosecondes.

2. Procédé selon la revendication précédente, **caractérisé en ce que** les impulsions femtosecondes sont des impulsions d'une durée inférieure à 1 picoseconde produites par un équipement laser femtoseconde.

3. Procédé selon la revendication 1 ou 2, **caractérisé en ce que** les impulsions femtosecondes agissant pour réaliser l'ouverture à travers la couche de protection et les impulsions femtosecondes agissant pour réaliser la cavité dans le support sont produites par un même équipement laser femtoseconde.

4. Procédé selon l'une des revendications précédentes, **caractérisé en ce qu'**il comprend un arrêt momentané des impulsions femtosecondes pour modifier les paramètres d'émission des dites impulsions entre l'étape d'enlèvement de matière consistant à réaliser ladite ouverture à travers la couche de protection et l'étape d'enlèvement de matière consistant à former ladite cavité dans le support.

5. Procédé selon l'une des revendications précédentes, **caractérisé en ce que** la couche de protection est une résine photosensible.

6. Procédé selon la revendication précédente, **caractérisé en ce qu'**il comprend une étape de polymérisation de la résine (3) par exposition UV.

7. Procédé selon l'une des revendications précédentes, **caractérisé en ce que** la couche de protection est déposée par l'une des techniques de dépôt comportant un dépôt par électrophorèse et un dépôt par enduction centrifuge.

8. Procédé selon l'une des revendications précédentes, **caractérisé en ce que** le dépôt de matière dans la cavité est réalisé en utilisant l'une des techniques du groupe comportant un dépôt galvanique, un dépôt chimique en phase vapeur (CVD), un dépôt physique en phase vapeur (PVD) et un dépôt de couches atomiques (ALD).

9. Procédé selon l'une des revendications précédentes, **caractérisé en ce que** le support comprend une surface du composant horloger.

10. Procédé selon l'une des revendications précédentes, **caractérisé en ce que** l'ouverture à travers la couche de protection dégage un rebord autour de la creusure au niveau de la surface du composant horloger, et **en ce que**, lors de l'étape de dépôt du matériau de décoration, on dépose ledit matériau de décoration sur le rebord.

11. Procédé de fabrication d'un composant horloger, comportant les étapes suivantes:
• dépôt d'une couche de protection (3) sur un support (1) ;
• enlèvement de matière consistant à réaliser une ouverture (4 ; 4A, 4B, 4C) à travers la couche de protection (3), le procédé comprenant les étapes complémentaires suivantes :
• enlèvement de matière consistant à former une cavité (5 ; 5A, 5B, 5C) dans ledit support (1), la cavité (5 ; 5A, 5B, 5C) étant positionnée au droit d'au moins une partie de l'ouverture (4 ; 4A, 4B, 4C) à travers la couche de protection (3),
• dépôt de matière (6 ; 14) à travers ladite ouverture (4 ; 4A, 4B, 4C), et
• élimination de la couche de protection (3), et dans lequel les étapes d'enlèvement de matière consistant à réaliser respectivement l'ouverture (4 ; 4A, 4B, 4C) à travers la couche de protection (3) et la cavité (5 ; 5A, 5B, 5C) sont réalisées simultanément ou directement l'une après l'autre à l'aide d'impulsions femtosecondes, et dans lequel, lors des étapes d'enlèvement de matière dans la couche de protection et dans le support, on réalise un moule présentant au moins une première profondeur égale à l'épaisseur de la couche de protection et au moins une deuxième profondeur égale à l'épaisseur de la couche de protection augmentée de la profondeur de ladite cavité dans le support.

12. Procédé selon la revendication précédente, **caractérisé en ce que**, lors de l'étape de dépôt de matière, on dépose dans ledit moule un métal ou alliage métallique formant le composant horloger, puis on démoule le composant horloger en éliminant la couche de protection et en détachant le support.

13. Procédé selon la revendication 11 ou 12, **caractérisé en ce que**, lors de l'étape de dépôt de matière, on remplit le moule et on dépose une couche additionnelle de métal ou alliage métallique du composant horloger sur la couche de protection, et **en ce qu'**il est prévu une étape subséquente de mise à niveau consistant à éliminer ladite couche additionnelle.

14. Procédé selon l'une des revendications 11 à 13, **caractérisé en ce que**
• lors des étapes d'enlèvement de matière dans la couche de protection (3) et dans le support (1), on réalise dans le support (1) au moins une cavité (5B) de réception d'un insert (11), dont l'embouchure communique avec l'ouverture (4) à travers la couche de protection (3), celle-ci dégageant une partie (7A) du support autour de ladite embouchure;
• on place l'insert (11) dans ladite cavité (5B), ledit insert (11) faisant saillie hors de la cavité (5B) dans l'ouverture (4) à travers la couche de protection (3);
• lors de l'étape de dépôt de matière, on dépose à travers ladite ouverture (4) un métal ou alliage métallique (14),
• puis on démoule le composant horloger (10) intégrant l'insert (11) en éliminant la couche de protection (3) et en détachant le support (1).

15. Procédé selon l'une des revendications 11 à 14, **caractérisé en ce que** le support (1) comporte un substrat sur lequel au moins un premier élément de composant horloger (12A, 12B) est déposé, et **en ce que** :
• lors de l'étape de dépôt, la couche de protection (3) est déposée sur le support (1) de manière à recouvrir intégralement le premier élément (12A),
• lors des étapes d'enlèvement de matière dans la couche de protection (3) et dans le support (1), on réalise l' ouverture (4) à travers la couche de protection et une creusure (13A) dans le premier élément de composant horloger (12A), ladite ouverture dégageant la creusure (13A), un rebord de la creusure et une partie du substrat adjacente au premier élément de composant horloger, et formant un moule (8A) comportant la creusure, ledit rebord et ladite partie de substrat adjacente;
• lors de l'étape de dépôt de matière, on dépose du métal ou un alliage métallique dans ledit moule (8A) afin de former un deuxième élément du composant horloger (14A);
• puis on démoule le composant horloger comportant le premier et le deuxième élément (12A, 14A) en éliminant la couche de protection (3) et en détachant le substrat (1).

16. Procédé selon l'une des revendications précédentes, **caractérisé en ce que** le composant comprend plusieurs matériaux, notamment plusieurs alliages métalliques.

## Patentansprüche

1. Verfahren zur Herstellung eines verzierten Uhrenbauteils, das die folgenden Schritte beinhaltet:
• Aufbringen einer Schutzschicht (3) auf einen Träger (1) ;
• Abtragen von Material, das darin besteht, eine Öffnung (4; 4A, 4B, 4C) durch die Schutzschicht (3) hindurch auszuführen,
wobei das Verfahren die folgenden ergänzenden Schritte umfasst:
• Abtragen von Material, das darin besteht, eine Kavität (5; 5A, 5B, 5C) in dem Träger (1) zu bilden, wobei die Kavität (5; 5A, 5B, 5C) direkt unter zumindest einem Teil der Öffnung (4; 4A, 4B, 4C) durch die Schutzschicht hindurch (3) positioniert ist,
• Aufbringen von Material (6; 14) durch die Öffnung (4; 4A, 4B, 4C) hindurch, das darin besteht, ein Verzierungsmaterial in der eine Vertiefung bildenden Kavität aufzubringen, und
• Entfernen der Schutzschicht (3),
und bei dem die Schritte des Abtragens von Material, die jeweils darin bestehen, die Öffnung (4; 4A, 4B, 4C) durch die Schutzschicht (3) hindurch und die Kavität (5; 5A, 5B, 5C) auszuführen, gleichzeitig oder unmittelbar nacheinander mithilfe von Femtosekundenimpulsen ausgeführt werden.

2. Verfahren nach dem vorhergehenden Anspruch, **dadurch gekennzeichnet, dass** die Femtosekundenimpulse Impulse mit einer Dauer von weniger als 1 Pikosekunde sind, die von einem Femtosekundenlasergerät erzeugt werden.

3. Verfahren nach Anspruch 1 oder 2, **dadurch gekennzeichnet, dass** die zum Ausführen der Öffnung durch die Schutzschicht hindurch wirkenden Femtosekundenimpulse und die zum Ausführen der Kavität in dem Träger wirkenden Femtosekundenimpulse von demselben Femtosekundenlasergerät erzeugt werden.

4. Verfahren nach einem der vorhergehenden Ansprüche, **dadurch gekennzeichnet, dass** es ein kurzzeitiges Stoppen der Femtosekundenimpulse umfasst, um die Emissionsparameter der Impulse zwischen dem Schritt des Abtragens von Material, der darin besteht, die Öffnung durch die Schutzschicht hindurch auszuführen, und dem Schritt des Abtragens von Material, der darin besteht, die Kavität in dem Träger auszuführen, zu ändern.

5. Verfahren nach einem der vorhergehenden Ansprüche, **dadurch gekennzeichnet, dass** die Schutzschicht ein Fotolack ist.

6. Verfahren nach dem vorhergehenden Anspruch, **dadurch gekennzeichnet, dass** es einen Schritt zur Polymerisation des Lacks (3) durch UV-Belichtung umfasst.

7. Verfahren nach einem der vorhergehenden Ansprüche, **dadurch gekennzeichnet, dass** die Schutzschicht mit einer der Aufbringungstechniken aufgebracht wird, die ein elektrophoretisches Aufbringen und ein Aufbringen durch Rotationsbeschichtung beinhalten.

8. Verfahren nach einem der vorhergehenden Ansprüche, **dadurch gekennzeichnet, dass** das Aufbringen von Material in der Kavität unter Verwendung einer der Techniken der Gruppe ausgeführt wird, die eine galvanische Abscheidung, eine chemische Gasphasenabscheidung (CVD), eine physikalische Gasphasenabscheidung (PVD) und eine Atomlagenabscheidung (ALD) umfasst.

9. Verfahren nach einem der vorhergehenden Ansprüche, **dadurch gekennzeichnet, dass** der Träger eine Oberfläche des Uhrenbauteils umfasst.

10. Verfahren nach einem der vorhergehenden Ansprüche, **dadurch gekennzeichnet, dass** die Öffnung durch die Schutzschicht hindurch eine Einfassung um die Vertiefung herum auf Höhe der Oberfläche des Uhrenbauteils freilegt und dass beim Schritt des Aufbringens des Verzierungsmaterials das Verzierungsmaterial auf die Einfassung aufgebracht wird.

11. Verfahren zur Herstellung eines Uhrenbauteils, das die folgenden Schritte beinhaltet:
• Aufbringen einer Schutzschicht (3) auf einen Träger (1) ;
• Abtragen von Material, das darin besteht, eine Öffnung (4; 4A, 4B, 4C) durch die Schutzschicht (3) hindurch auszuführen,
wobei das Verfahren die folgenden ergänzenden Schritte umfasst:
• Abtragen von Material, das darin besteht, eine Kavität (5; 5A, 5B, 5C) in dem Träger (1) zu bilden, wobei die Kavität (5; 5A, 5B, 5C) direkt unter zumindest einem Teil der Öffnung (4; 4A, 4B, 4C) durch die Schutzschicht hindurch (3) positioniert ist,
• Aufbringen von Material (6; 14) durch die Öffnung (4; 4A, 4B, 4C) hindurch und
• Entfernen der Schutzschicht (3),
und bei dem die Schritte des Abtragens von Material, die jeweils darin bestehen, die Öffnung (4; 4A, 4B, 4C) durch die Schutzschicht (3) hindurch und die Kavität (5; 5A, 5B, 5C) auszuführen, gleichzeitig oder unmittelbar nacheinander mithilfe von Femtosekundenimpulsen ausgeführt werden,
und bei dem bei den Schritten des Abtragens von Material in der Schutzschicht und im Träger eine Form ausgeführt wird, die mindestens eine erste Tiefe gleich der Dicke der Schutzschicht und mindestens eine zweite Tiefe gleich der Dicke der Schutzschicht zuzüglich der Kavitätstiefe im Träger aufweist.

12. Verfahren nach dem vorhergehenden Anspruch, **dadurch gekennzeichnet, dass** beim Schritt des Aufbringens von Material in der Form ein Metall oder eine Metalllegierung aufgebracht wird, das oder die das Uhrenbauteil bildet, dann das Uhrenbauteil ausgeformt wird, indem die Schutzschicht entfernt und der Träger gelöst wird.

13. Verfahren nach Anspruch 11 oder 12, **dadurch gekennzeichnet, dass** beim Schritt des Aufbringens von Material die Form gefüllt wird und eine zusätzliche Schicht aus Metall oder Metalllegierung des Uhrenbauteils auf die Schutzschicht aufgebracht wird, und dadurch, dass ein nachfolgender Schritt des Nivellierens vorgesehen ist, der darin besteht, die zusätzliche Schicht zu entfernen.

14. Verfahren nach einem der Ansprüche 11 bis 13, **dadurch gekennzeichnet, dass**:
• bei den Schritten des Abtragens von Material in der Schutzschicht (3) und im Träger (1) mindestens eine Kavität (5B) zum Aufnehmen einer Einlage (11) im Träger (1) ausgeführt wird, deren Mündung mit der Öffnung (4) durch die Schutzschicht (3) hindurch in Verbindung steht, wobei diese einen Teil (7A) des Trägers um die Mündung herum freilegt;
• die Einlage (11) in der Kavität (5B) platziert wird, wobei die Einlage (11) aus der Kavität (5B) in die Öffnung (4) durch die Schutzschicht (3) hindurch herausragt;
• beim Schritt des Aufbringens von Material durch die Öffnung (4) hindurch ein Metall oder eine Metalllegierung (14) aufgebracht wird,
• dann das die Einlage (11) beinhaltende Uhrenbauteil (10) ausgeformt wird, indem die Schutzschicht (3) entfernt wird und indem der Träger (1) gelöst wird.

15. Verfahren nach einem der Ansprüche 11 bis 14, **dadurch gekennzeichnet, dass** der Träger (1) ein Substrat beinhaltet, auf das mindestens ein Uhrenbauteilelement (12A, 12B) aufgebracht wird, und dass:
• beim Schritt des Aufbringens die Schutzschicht (3) auf den Träger (1) so aufgebracht wird, dass das erste Element (12A) vollständig bedeckt ist,
• bei den Schritten des Abtragens von Material in der Schutzschicht (3) und im Träger (1) die Öffnung (4) durch die Schutzschicht hindurch und eine Vertiefung (13A) in dem ersten Uhrenbauteilelement (12A) ausgeführt werden, wobei die Öffnung die Vertiefung (13A), eine Einfassung der Vertiefung und einen an das erste Uhrenbauteilelement angrenzenden Teil des Substrats freilegt und eine Form (8A) bildet, welche die Vertiefung, die Einfassung und den angrenzenden Substratteil beinhaltet;
• beim Schritt des Aufbringens von Material Metall oder eine Metalllegierung in der Form (8A) aufgebracht wird, um ein zweites Element des Uhrenbauteils (14A) zu bilden;
• dann das Uhrenbauteil, welches das erste und das zweite Element (12A, 14A) beinhaltet, ausgeformt wird, indem die Schutzschicht (3) entfernt wird und indem das Substrat (1) gelöst wird.

16. Verfahren nach einem der vorhergehenden Ansprüche, **dadurch gekennzeichnet, dass** das Bauteil mehrere Werkstoffe umfasst, insbesondere mehrere Metalllegierungen.

## Claims

1. Method for manufacturing a decorated timepiece component, including the following steps:
• depositing a protective layer (3) on a support (1);
• removing material, consisting in making an opening (4; 4A, 4B, 4C) through the protective layer (3); the method comprising the following additional steps:
• removing material, consisting in forming a cavity (5; 5A, 5B, 5C) in said support (1), the cavity (5; 5A, 5B, 5C) being positioned in line with at least part of the opening (4; 4A, 4B, 4C) through the protective layer (3) ;
• depositing material (6; 14) through said opening (4; 4A, 4B, 4C), consisting in depositing a decorative material in the cavity forming a recess; and
• removing the protective layer (3);
and wherein the steps of removing material, consisting in making the opening (4; 4A, 4B, 4C) through the protective layer (3) and the cavity (5; 5A, 5B, 5C), respectively, are carried out simultaneously or one straight after the another using femtosecond pulses.

2. Method according to the preceding claim, **characterized in that** the femtosecond pulses are pulses with a duration that is shorter than 1 picosecond, produced by means of femtosecond laser equipment.

3. Method according to Claim 1 or 2, **characterized in that** the femtosecond pulses acting to make the opening through the protective layer and the femtosecond pulses acting to make the cavity in the support are produced by means of the same femtosecond laser equipment.

4. Method according to one of the preceding claims, **characterized in that** it comprises a brief break in the femtosecond pulses in order to modify the emission parameters of said pulses between the step of removing material consisting in making said opening through the protective layer and the step of removing material consisting in forming said cavity in the support.

5. Method according to one of the preceding claims, **characterized in that** the protective layer is a photoresist.

6. Method according to the preceding claim, **characterized in that** it comprises a step of polymerizing the resist (3) through UV exposure.

7. Method according to one of the preceding claims, **characterized in that** the protective layer is deposited by means of one of the deposition techniques including electrophoretic deposition and spin coating.

8. Method according to one of the preceding claims, **characterized in that** the deposition of material in the cavity is carried out using one of the techniques from the group including electroplating, chemical vapour deposition (CVD), physical vapour deposition (PVD) and atomic layer deposition (ALD).

9. Method according to one of the preceding claims, **characterized in that** the support comprises a surface of a timepiece component.

10. Method according to one of the preceding claims, **characterized in that** the opening through the protective layer leaves a rim clear around the recess at the surface of the timepiece component, and **in that**, in the step of depositing the decorative material, said decorative material is deposited on the rim.

11. Method for manufacturing a timepiece component, including the following steps:
• depositing a protective layer (3) on a support (1);
• removing material, consisting in making an opening (4; 4A, 4B, 4C) through the protective layer (3); the method comprising the following additional steps:
• removing material, consisting in forming a cavity (5; 5A, 5B, 5C) in said support (1), the cavity (5; 5A, 5B, 5C) being positioned in line with at least part of the opening (4; 4A, 4B, 4C) through the protective layer (3) ;
• depositing material (6; 14) through said opening (4; 4A, 4B, 4C); and
• removing the protective layer (3);
and wherein the steps of removing material, consisting in making the opening (4; 4A, 4B, 4C) through the protective layer (3) and the cavity (5; 5A, 5B, 5C), respectively, are carried out simultaneously or one straight after the another using femtosecond pulses; and wherein, in the steps of removing material from the protective layer and from the support, a mould having at least a first depth equal to the thickness of the protective layer and at least a second depth equal to the thickness of the protective layer plus the depth of said cavity in the support is produced.

12. Method according to the preceding claim, **characterized in that**, in the step of depositing material, a metal or metal alloy forming the timepiece component is deposited in said mould, and then the timepiece component is removed from the mould by removing the protective layer and detaching the support.

13. Method according to Claim 11 or 12, **characterized in that**, in the step of depositing material, the mould is filled and an additional layer of metal or metal alloy of the timepiece component is deposited on the protective layer, and **in that** a subsequent levelling step consisting in removing said additional layer is provided.

14. Method according to one of Claims 11 to 13, **characterized in that**:
• in the steps of removing material from the protective layer (3) and from the support (1), at least one cavity (5B) for receiving an insert (11) is made in the support (1), the mouth of which communicates with the opening (4) through the protective layer (3), this leaving a portion (7A) of the support clear around said mouth;
• the insert (11) is placed in said cavity (5B), said insert (11) protruding from the cavity (5B) into the opening (4) through the protective layer (3);
• in the step of depositing material, a metal or metal alloy (14) is deposited through said opening (4);
• then the timepiece component (10) incorporating the insert (11) is removed from the mould by removing the protective layer (3) and detaching the support (1).

15. Method according to one of Claims 11 to 14, **characterized in that** the support (1) includes a substrate on which at least a first timepiece component element (12A, 12B) is deposited, and **in that**:
• in the deposition step, the protective layer (3) is deposited on the support (1) so as to cover the first element (12A) entirely;
• in the steps of removing material from the protective layer (3) and from the support (1), the opening (4) is made through the protective layer and a recess (13A) is made in the first timepiece component element (12A), said opening leaving the recess (13A), a rim of the recess and a portion of the substrate adjacent to the first timepiece component element clear, and a mould (8A) including the recess, said rim and said adjacent substrate portion is formed;
• in the step of depositing material, metal or a metal alloy is deposited in said mould (8A) in order to form a second element of the timepiece component (14A);
• then the timepiece component including the first and the second element (12A, 14A) is removed from the mould by removing the protective layer (3) and detaching the substrate (1).

16. Method according to one of the preceding claims, **characterized in that** the component comprises a plurality of materials, in particular a plurality of metal alloys.
